# EUROPEAN PATENT APPLICATION

(11) **EP 4 679 649 A1**
(43) Date of publication of application: **14.01.2026**
(21) Application number: 23926235.5
(22) Date of filing: 06.03.2023
(51) Int. Cl.: H02H 3/05

(54) **PROTECTION AND CONTROL TERMINAL DEVICE, PROTECTION AND CONTROL METHOD**

(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: YAMAMORI, Wataru, Kawasaki-shi, Kanagawa 212-0013 (JP); ISHIBASHI, Akira, Kawasaki-shi, Kanagawa 212-0013 (JP); HAMAMATSU, Koichi, Kawasaki-shi, Kanagawa 212-0013 (JP)
(74) Representative: Henkel & Partner mbB
(86) International application number: PCT/JP2023/008425
(87) International publication number: WO 2024/185021

(57) **Abstract**

A protection and control terminal device of an embodiment constitutes a protection and control system that performs protection and control of devices that constitute a power system. The protection and control terminal device of the embodiment comprises: a storage unit that stores a first application that executes functions of the protection and control terminal device, and a second application that constitutes the protection and control system and executes functions of a protection and control terminal device different from said protection and control terminal device; a first calculating unit that executes the first application; and a second calculating unit that executes the second application when an abnormality occurs in said protection and control terminal device or the protection and control terminal device different from said protection and control terminal device.

## Description

### FIELD

Embodiments of the present invention relate to a protection and control terminal device constituting a protection and control system, for example, in a substation, and a protection and control method.

### BACKGROUND

For example, in a protection and control system in a substation, a technological transition of the connection between devices from a metal cable to a communication cable is advancing with the establishment of International Standard IEC 61850. Further, networking inside the substation is progressing.

The protection and control system is classified into a station level which performs monitor and control of the entire substation, a bay level which performs protection of an electric power system and equipment control in the substation, and a process level which collects information from a circuit breaker, a disconnecting switch, a transformer, and so on arranged in the substation. At each of the levels, terminal devices for executing functions such as protection and control, processing, and so on are arranged, and the terminal devices are connected over a network.

However, networking and digitalization in the substation are progressing, and the functions of detection and notification of abnormalities of various terminal devices are advanced. To restore the system, it is still necessary to go to a site such as the substation and perform a work of directly repairing and replacing the terminal devices. Therefore, human and economic burdens are required to maintain the protection and control system.

### PRIOR ART DOCUMENT

### PATENT DOCUMENT

Patent Document 1: Japanese Laid-open Patent Publication No. 2010-68594

### SUMMARY OF THE INVENTION

### PROBLEMS TO BE SOLVED BY THE INVENTION

As explained above, there is a problem with a protection and control terminal device in a conventional protection and control system and a protection and control method in which the burden of restoring the system from an abnormality is heavy. A problem to be solved by the present invention is to provide a protection and control terminal device constituting a protection and control system capable of automatic restoration at the occurrence of an abnormality in the system and a protection and control method.

### MEANS FOR SOLVING THE PROBLEMS

A protection and control terminal device in an embodiment constitutes a protection and control system for protecting and controlling equipment constituting an electric power system. The protection and control terminal device in the embodiment includes: a storage unit configured to store a first application for executing a function of the protection and control terminal device, and a second application for executing a function of another protection and control terminal device constituting the protection and control system and different from the protection and control terminal device; a first arithmetic unit configured to execute the first application; and a second arithmetic unit configured to execute the second application when an abnormality occurs in the protection and control terminal device or the another protection and control terminal device different from the protection and control terminal device.

### BRIEF DESCRIPTION OF THE DRAWINGS

[Fig. 1] A block diagram illustrating a configuration of a protection and control system in first to fourth embodiments.
[Fig. 2] A block diagram illustrating a functional configuration of protection and control terminal devices in the first embodiment.
[Fig. 3] A conceptual diagram illustrating applications stored in a storage unit in the first embodiment.
[Fig. 4] A conceptual diagram illustrating applications stored in a storage unit in the first embodiment.
[Fig. 5] A block diagram illustrating a functional configuration of an arithmetic unit in the first embodiment.
[Fig. 6] A flowchart illustrating the operation of the protection and control terminal device in the first embodiment.
[Fig. 7] A conceptual diagram illustrating applications stored in the storage unit in the first embodiment.
[Fig. 8] A conceptual diagram illustrating applications stored in the storage unit in the first embodiment.
[Fig. 9] A block diagram illustrating a functional configuration of protection and control terminal devices in a second embodiment.
[Fig. 10] A conceptual diagram illustrating applications stored in a storage unit in the second embodiment.
[Fig. 11] A conceptual diagram illustrating applications stored in a storage unit in the second embodiment.
[Fig. 12] A conceptual diagram illustrating applications stored in a storage unit in the second embodiment.
[Fig. 13] A flowchart illustrating the operation of the protection and control terminal device in the second embodiment.
[Fig. 14] A conceptual diagram illustrating applications stored in the storage unit in the second embodiment.
[Fig. 15] A conceptual diagram illustrating applications stored in the storage unit in the second embodiment.
[Fig. 16] A conceptual diagram illustrating applications stored in the storage unit in the second embodiment.
[Fig. 17] A block diagram illustrating a functional configuration of a protection and control terminal device in a third embodiment.
[Fig. 18] A conceptual diagram illustrating applications stored in a storage unit in the third embodiment.
[Fig. 19] A conceptual diagram illustrating applications stored in a storage unit in the third embodiment.
[Fig. 20] A conceptual diagram illustrating applications stored in a storage unit in the third embodiment.
[Fig. 21] A flowchart illustrating the operation of the protection and control terminal device in the third embodiment.
[Fig. 22] A conceptual diagram illustrating applications stored in the storage unit in the third embodiment.
[Fig. 23] A conceptual diagram illustrating applications stored in the storage unit in the third embodiment.
[Fig. 24] A conceptual diagram illustrating applications stored in the storage unit in the third embodiment.
[Fig. 25] A conceptual diagram illustrating applications stored in the storage unit in the third embodiment.
[Fig. 26] A conceptual diagram illustrating applications stored in the storage unit in the third embodiment.
[Fig. 27] A conceptual diagram illustrating applications stored in the storage unit in the third embodiment.
[Fig. 28] A block diagram illustrating a functional configuration of protection and control terminal devices in a fourth embodiment.
[Fig. 29] A conceptual diagram illustrating applications stored in a storage unit in the fourth embodiment.
[Fig. 30] A conceptual diagram illustrating applications stored in a storage unit in the fourth embodiment.
[Fig. 31] A conceptual diagram illustrating applications stored in a storage unit in the fourth embodiment.
[Fig. 32] A flowchart illustrating the operation of the protection and control terminal device in the fourth embodiment.
[Fig. 33] A conceptual diagram illustrating applications stored in the storage unit in the fourth embodiment.
[Fig. 34] A conceptual diagram illustrating applications stored in the storage unit in the fourth embodiment.
[Fig. 35] A conceptual diagram illustrating applications stored in the storage unit in the fourth embodiment.

### DETAILED DESCRIPTION

### (First embodiment)

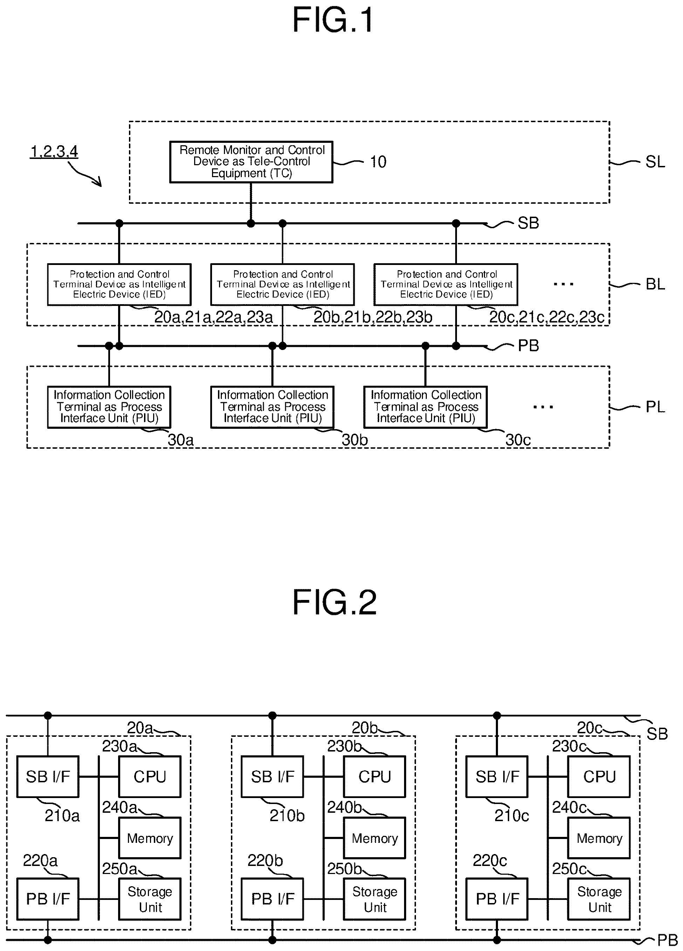

Hereinafter, a configuration of a protection and control system in an embodiment will be explained with reference to the drawings. Fig. 1 is a block diagram illustrating a configuration of a protective system 1 in the embodiment.

As illustrated in Fig. 1, the protection and control system 1 in this embodiment is a system which detects system information related to an electric power system, for example, in a substation or the like, and realizes distributed control related to the protection of the electric power system based on a detection result. The protection and control system 1 has a remote monitor and control device 10 as Tele-Control equipment (TC), protection and control terminal devices 20a to 20c as Intelligent Electronic Devices (IEDs), and information collection and control terminals 30a to 30c as Process Interface Units (PIUs). The control level of the remote monitor and control device 10 of them is called a station level, the control level of the protection and control terminal devices 20a to 20c is called a bay level, and the control level of the information collection and control terminals 30a to 30b is called a process level.

The remote monitor and control device 10 is a monitor and control device which is installed on a substation basis and executes monitor and control of the substation or the like. The remote monitor and control device 10 can be realized by a so-called computer device. The remote monitor and control device 10 is connected to a station bus SB as a network.

The protection and control terminal devices 20a to 20c are terminal devices which realize a protection function, a control function, a recording function, a communication function, and so on of the electric power system in the substation or the like. In an example illustrated in Fig. 1, three protection and control terminal devices 20a to 20c are arranged for one remote monitor and control device 10, but not limited to this, two or less or four or more protection and control terminal devices may be provided. The protection and control terminal devices 20a to 20c can be realized by so-called computer devices. The protection and control terminal devices 20a to 20c are connected to the station bus SB and a process bus PB as a network.

The information collection and control terminals 30a to 30c are interface devices which output information usable by the protection and control terminal devices 20a to 20c by converting analog data, equipment open/close state information, and failure information which are output from substation equipment in the substation or the like into digital data. The three information collection and control terminals 30a to 30c are arranged in monitor targets of the one remote monitor and control device 10 in the example illustrated in Fig. 1, but not limited to this, four or more information collection and control terminals may be provided. In the example illustrated in Fig. 1, two information collection and control terminals may be provided. The information collection and control terminals 30a to 30c can be realized by so-called computer devices. The information collection and control terminals 30a to 30c are connected to the process bus PB. The information collection and control terminals 30a to 30c may be made to function as the protection and control terminal devices 20a to 20c.

In Fig. 1, the station bus SB and the process bus PB are illustrated as different networks but, not limited to this, may be constituted of the same network.

The information collection and control terminals 30a to 30c receive the analog data, equipment open/close state, and failure information which are output from the substation equipment, perform predetermined conversion processing to generate system information, and output it to the protection and control terminal devices 20a to 20c via the process bus PB. The system information output from each of the information collection and control terminals 30a to 30c is transmitted to any or all of the protection and control terminal devices 20a to 20c which perform a protection and control operation using the information. The protection and control terminal devices 20a to 20c execute protection processing and control processing of the electric power system based on the received system information. The protection and control terminal devices 20a to 20c generate monitor information representing the system information of the electric power system based on execution results of the protection processing and the control processing, and output them to the remote monitor and control device 10 via the station bus SB. The remote monitor and control device 10 may be configured to be capable of receiving the monitor information and providing it to the user, and notifying a higher-order system of the information.

The remote monitor and control device 10 outputs a control command to the protection and control terminal devices 20a to 20c via the station bus SB in order to perform an open/close control of equipment, and the protection and control terminal devices 20a to 20c output, according to the command, control commands to the information collection and control terminals 30a to 30c via the process bus PB. The information collection and control terminals 30a to 30c perform, according to the commands, control output to various types of equipment to be systematically operated. Note that the protection and control terminal devices 20a to 20c may also be capable of control output as with the information collection and control terminals 30a to 30c.

The protection and control terminal devices 20a to 20c perform arithmetic operations whether there is an accident in the electric power system based on the analog data and equipment information which are output from the substation equipment obtained via the process bus PB. If a system accident is detected, the protection and control terminal devices 20a to 20c output open commands (trip commands) to a circuit breaker being one type of system operation equipment to the information collection and control terminals 30a to 30c via the process bus PB. The information collection and control terminals 30a to 30c may perform, according to the commands, control output for opening to the circuit breaker being the one type of the system operation equipment.

Next, the protection and control terminal device in the embodiment will be explained in detail with reference to Fig. 2. Fig. 2 is a block diagram illustrating a configuration example of the protection and control terminal devices 20a to 20c.

As illustrated in Fig. 2, the protection and control terminal device 20a has a station bus interface (SB I/F) 210a, a process bus interface (PB I/F) 220a, an arithmetic unit (CPU) 230a, a memory 240a, and a storage unit 250a. The protection and control terminal devices 20b and 20c have a common configuration. More specifically, the protection and control terminal device 20b has a station bus interface (SB I/F) 210b, a process bus interface (PB I/F) 220b, an arithmetic unit (CPU) 230b, a memory 240b, and a storage unit 250b. Similarly, the protection and control terminal device 20c has a station bus interface (SB I/F) 210c, a process bus interface (PB I/F) 220c, an arithmetic unit (CPU) 230c, a memory 240c, and a storage unit 250c. Hereinafter, the duplicated explanation of the common elements will be omitted.

The station bus interface 210a is an interface which transmits and receives a signal to/from the remote monitor and control device 10 via the station bus SB. The process bus interface 220a is an interface which transmits and receives a signal to/from the information collection and control terminals 30a to 30c via the process bus PB.

The arithmetic unit 230a is an arithmetic block which executes a predetermined application stored in the later-explained storage unit 250a to fulfill a protection processing function and a control processing function of the electric power system. The memory 240a is a volatile storage medium which temporarily stores data. The memory 240a temporarily stores an application and data under an instruction of the arithmetic unit 230a. The memory 240a can be realized by, for example, a flash memory or the like.

The storage unit 250a is a non-volatile storage medium for storing an application which realizes various functions of the protection and control terminal device 20a, a control application which controls the execution of the application, and so on. The storage unit 250a stores in advance predetermined applications but may store an application downloaded via the station bus SB according to the instruction from the arithmetic unit 230a. Further, the storage unit 250a may store data to be used for application control.

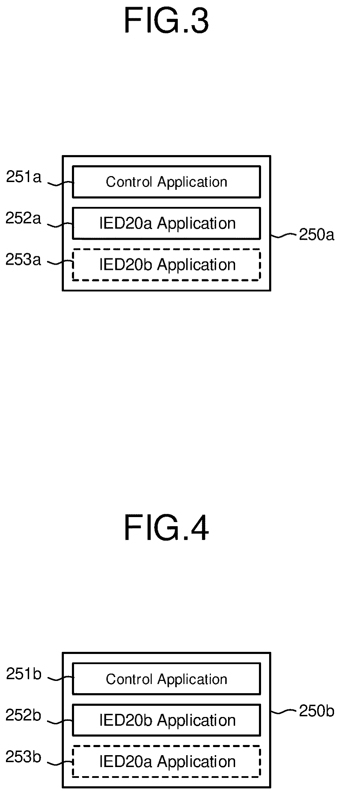

Here, the applications stored in the storage unit will be explained in detail with reference to Fig. 2 to Fig. 4. Fig. 3 is a conceptual diagram illustrating storage contents of the storage unit 250a of the protection and control terminal device 20a, and Fig. 4 is a conceptual diagram illustrating storage contents of the storage unit 250b of the protection and control terminal device 20b.

As illustrated in Fig. 3, the storage unit 250a in the embodiment stores a control application 251a, an IED 20a application 252a (first application), and an IED 20b application 253a (second application). The control application 251a is an application which controls start and stop of an application. The IED 20a application 252a is an application which realizes the functions of the protection and control terminal device 20a. The IED 20b application 253a is an application which realizes the functions of the protection and control terminal device 20b.

More specifically, the storage unit 250a of the protection and control terminal device 20a stores the application which realizes the functions of the adjacent protection and control terminal device 20b in addition to the application which realizes the functions of the protection and control terminal device 20a itself. However, the IED 20b application 253a which realizes the functions of the adjacent protection and control terminal device 20b is merely stored in the storage unit 250a, and the arithmetic unit 230a is not executing the IED 20b application 253a. In the following explanation of the storage unit, a running application is indicated by a solid line, and a not-running application is indicated by a broken line.

As illustrated in Fig. 4, the storage unit 250b in the embodiment stores a control application 251b, an IED 20b application 252b, and an IED 20a application 253b. The control application 251b is an application which controls start and stop of an application. The IED 20b application 252b is an application which realizes the functions of the protection and control terminal device 20b. The IED 20a application 253b is an application which realizes the functions of the protection and control terminal device 20a.

More specifically, the storage unit 250b of the protection and control terminal device 20b stores the application which realizes the functions of the adjacent protection and control terminal device 20a in addition to the application which realizes the functions of the protection and control terminal device 20b itself. However, the IED 20a application 253b which realizes the functions of the adjacent protection and control terminal device 20a is merely stored in the storage unit 250b, and the arithmetic unit 230b of the protection and control terminal device 20b is not executing the IED 20a application 253b.

As explained above, the protection and control terminal devices 20a to 20c in the embodiment hold the applications which realize the functions of the adjacent protection and control terminal devices 20a to 20c in addition to the applications which realize their own functions.

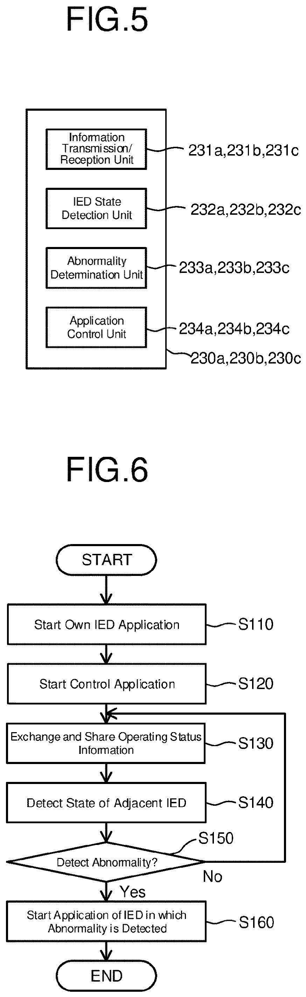

Here, the arithmetic units 230a to 230c of the protection and control terminal devices 20a to 20c will be explained in detail with reference to Fig. 5. Fig. 5 is a block diagram illustrating the functional configuration of the arithmetic unit 230a of the protection and control terminal device 20a. The respective functions of the arithmetic units 230a to 230c of the protection and control terminal devices 20a to 20c are common, and therefore the arithmetic unit 230a will be explained as a representative and the duplicated explanation will be omitted in the following.

The arithmetic unit 230a executes the control application 251a stored in the storage unit 250a and thereby functions as an arithmetic block having the functional configuration illustrated in Fig. 5. As illustrated in Fig. 5, by execution of the control application 251a, the arithmetic unit 230a functions as an information transmission/reception unit 231a, an IED state detection unit 232a, an abnormality determination unit 233a, and an application control unit 234a.

The information transmission/reception unit 231a is a functional block which functions as an interface for transmitting and receiving information to/from adjacent other protection and control terminal devices. The information transmission/reception unit 231a executes transmission/reception of an operating status of a device, information on available capacity in the storage unit, the acquired type of equipment information and operating state of the equipment, and a request and notification of these pieces of information, to/from the other protection and control terminal devices.

The IED state detection unit 232a is a functional block which detects the operating status of the self or other protection and control terminal devices 20a to 20c. The IED state detection unit 232a acquires the operating statuses of the other protection and control terminal devices via the information transmission/reception unit 231a or acquires the execution status of the application of the self-protection and control terminal device, and stores it in the storage unit 250a.

The abnormality determination unit 233a is a functional block which determines the presence or absence of an abnormality of the protection and control terminal device. The abnormality determination unit 233a determines the presence or absence of an abnormality of the self or other protection and control terminal devices which is acquired by the IED state detection unit 232a and stored in the storage unit 250a.

The application control unit 234a is a functional block which controls start and transmission/reception of the application of the self or other protection and control terminal devices. The application control unit 234a starts a predetermined application for complementing a protection and control terminal device in which an abnormality occurs.

Next, the operations of the protection and control terminal devices 20a and 20b in the embodiment will be explained in detail with reference to Fig. 6 to Fig. 8.

The arithmetic unit 230a of the protection and control terminal device 20a reads the IED 20a application 252a stored in the storage unit 250a and executes it on the memory 240a. Similarly, the arithmetic unit 230b of the protection and control terminal device 20b reads the IED 20b application 252b stored in the storage unit 250b and executes it on the memory 240b. Thus, the protection and control terminal devices 20a and 20b fulfill their respective functions (Step S110).

Next, the arithmetic unit 230a of the protection and control terminal device 20a reads the control application 251a stored in the storage unit 250a and executes it on the memory 240a. Similarly, the arithmetic unit 230b of the protection and control terminal device 20b executes the control application 251b stored in the storage unit 250b, on the memory 240b (Step S120).

The IED state detection unit 232a in the arithmetic unit 230a of the protection and control terminal device 20a inquires of the adjacent protection and control terminal device 20b about the operating status via the information transmission/reception unit 231a. In addition, the IED state detection unit 232a notifies the protection and control terminal device 20b of the operating status of the protection and control terminal device 20a.

The IED state detection unit 232b of the protection and control terminal device 20b which has received the inquiry notifies of the operating status of the protection and control terminal device 20b and stores the received operating status of the protection and control terminal device 20a in the storage unit 250b. By the above operations, the protection and control terminal device 20a and the protection and control terminal device 20b come into a state of sharing each other's operating statuses. The exchange of the operating statuses is executed at a predetermined time interval (Step S130).

Here, if an abnormality occurs in the function of the protection and control terminal device 20a, the abnormality determination unit 233b of the protection and control terminal device 20b detects the abnormality of the adjacent protection and control terminal device 20a at timing of exchange of the operating statuses. The detection of the abnormality of the adjacent protection and control terminal device is not limited to the time of exchange of the operating statuses. For example, when the protection and control terminal device itself detects its own abnormality, the protection and control terminal device may notify the adjacent protection and control terminal device of its own abnormality (Step S140).

If the abnormality determination unit 233b of the protection and control terminal device 20b detects an abnormality of the adjacent protection and control terminal device 20a (Yes at Step S150), the application control unit 234b starts the IED 20a application 253b stored in the storage unit 250b. Thus, the protection and control terminal device 20b fulfills the functions as the protection and control terminal device 20a in addition to the functions as the protection and control terminal device 20b (Step S160).

If the abnormality determination unit 233b of the protection and control terminal device 20b does not detect an abnormality of the adjacent protection and control terminal device 20a (No at Step S150), the IED state detection unit 232b of the protection and control terminal device 20b continues the exchange and sharing of the operating statuses (Step S130).

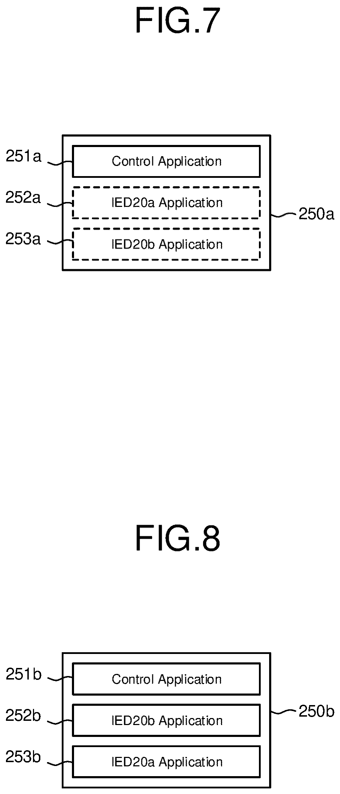

Fig. 7 illustrates the appearance of storage contents of the storage unit 250a of the protection and control terminal device 20a when the protection and control terminal device 20b detects an abnormality of the protection and control terminal device 20a, and Fig. 8 similarly illustrates the appearance of storage contents of the storage unit 250b of the protection and control terminal device 20b. As illustrated in Fig. 7, the IED 20a application 252a of the protection and control terminal device 20a has stopped its functions. Further, as illustrated in Fig. 8, the IED 20a application 253b in addition to the IED 20b application 252b are running in the protection and control terminal device 20b.

As explained above, in the protection and control terminal device in this embodiment, the application which fulfills the functions of the adjacent protection and control terminal device is stored in advance, and when a failure occurs in the adjacent protection and control terminal device, the stored functions of the adjacent protection and control terminal device are operated. By this operation, it is possible to ensure the backup function of the protection and control terminal device without using a spare hardware resource.

Note that in the above protection and control terminal device, the arithmetic unit 230b executes the IED 20a application 253b in addition to the IED 20b application 252b stored in the storage unit 250b, but the present invention is not limited to this. A plurality of arithmetic units or arithmetic areas in the arithmetic unit may be prepared to provide an arithmetic unit (arithmetic area) which executes the IED 20b application 252b and an arithmetic unit (arithmetic area) which executes the IED 20a application 253b.

### (Second embodiment)

Next, a protection and control system in a second embodiment will be explained. The protection and control system in the second embodiment is made by changing the storage contents of the application stored in the storage unit of the protection and control terminal device in the first embodiment. In the following explanation, elements common to those in the first embodiment are indicated by giving common signs and the duplicated explanation is omitted.

As illustrated in Fig. 1, a protection and control system 2 in this embodiment has a remote monitor and control device 10, protection and control terminal devices 21a to 21c, and information collection and control terminals 30a to 30c.

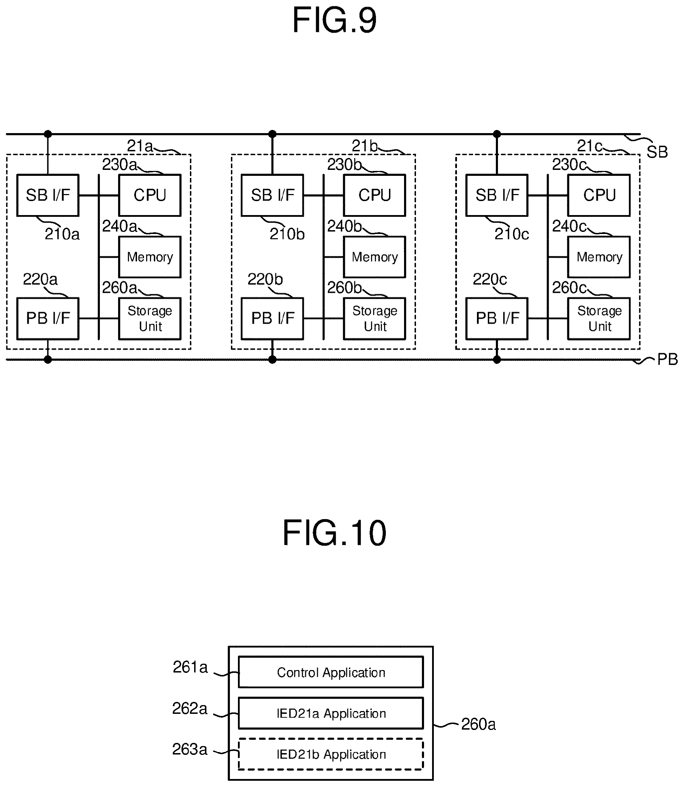

Fig. 9 is a block diagram illustrating a configuration example of the protection and control terminal devices 21a to 21c in the protection and control system 2 in this embodiment.

As illustrated in Fig. 9, the protection and control terminal device 21a is common in configuration with the protection and control terminal device 20a in the first embodiment except for a storage unit 260a. This also applies to the protection and control terminal devices 21b and 21c.

The storage unit 260a is a non-volatile storage medium for storing an application which realizes various functions of the protection and control terminal device 21a, a control application which controls execution of the application, and so on. The storage unit 260a stores in advance predetermined applications but may store an application downloaded via the station bus SB according to the instruction from the arithmetic unit 230a. Further, the storage unit 260a may store data to be used for application control. This also applies to storage units 260b and 260c.

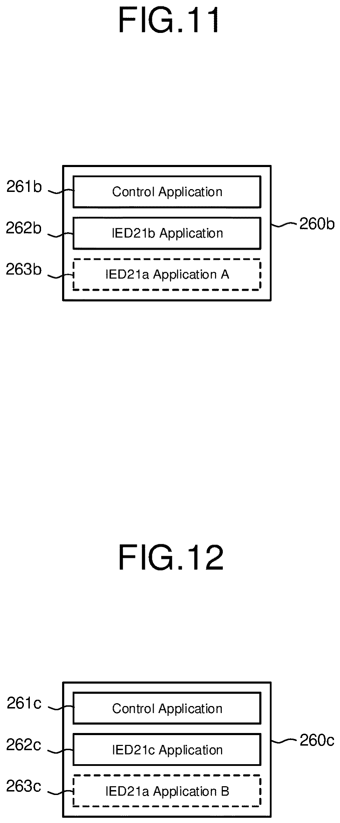

Here, the applications stored in the storage unit will be explained in detail with reference to Fig. 9 to Fig. 12. Fig. 10 is a conceptual diagram illustrating storage contents of the storage unit 260a of the protection and control terminal device 21a, and Fig. 11 is a conceptual diagram illustrating storage contents of the storage unit 260b of the protection and control terminal device 21b. Fig. 12 is a conceptual diagram illustrating storage contents of the storage unit 260c of the protection and control terminal device 21c.

As illustrated in Fig. 10, the storage unit 260a in the embodiment stores a control application 261a, an IED 21a application 262a, and an IED 21b application 263a. The control application 261a is an application which controls start and stop of an application. The IED 21a application 262a is an application which realizes the functions of the protection and control terminal device 21a. The IED 21b application 263a is an application which realizes the functions of the protection and control terminal device 21b.

More specifically, the storage unit 260a of the protection and control terminal device 21a stores the application which realizes the functions of the adjacent protection and control terminal device 21b in addition to the application which realizes the functions of the protection and control terminal device 21a itself. However, the IED 21b application 263a which realizes the functions of the adjacent protection and control terminal device 21b is merely stored in the storage unit 260a, and thus the arithmetic unit 230a is not executing the IED 21b application 263a.

As illustrated in Fig. 11, the storage unit 260b in the embodiment stores a control application 261b, an IED 21b application 262b, and an IED 21a application A 263b. The control application 261b is an application which controls start and stop of an application. The IED 21b application 262b is an application which realizes the functions of the protection and control terminal device 21b. The IED 21a application A 263b is an application which realizes part of the functions of the protection and control terminal device 21a.

The IED 21a application A stored in the storage unit 260b fulfills the functions of the whole protection and control terminal device 21a in conjunction with a later-explained IED 21a application B. More specifically, the storage unit 260b of the protection and control terminal device 21b stores part of the application which realizes the functions of the adjacent protection and control terminal device 21a in addition to the application which realizes the functions of the protection and control terminal device 21b itself. The IED 21a application A 263b which realizes the functions of the adjacent protection and control terminal device 21a is merely stored in the storage unit 260b, but is not being executed.

As illustrated in Fig. 12, the storage unit 260c in the embodiment stores a control application 261c, an IED 21c application 262c, and an IED 21a application B 263c. The control application 261c is an application which controls start and stop of an application. The IED 21c application 262c is an application which realizes the functions of the protection and control terminal device 21c. The IED 21a application B 263c is an application which realizes part of the functions of the protection and control terminal device 21a.

The IED 21a application B stored in the storage unit 260c fulfills the functions of the whole protection and control terminal device 21a in conjunction with the IED 21a application A stored in the storage unit 260b. More specifically, the storage unit 260c of the protection and control terminal device 21c stores the application which realizes part of the functions of the adjacent protection and control terminal device 21a in addition to the application which realizes the functions of the protection and control terminal device 21c itself. The IED 21a application B 263c which realizes the functions of the adjacent protection and control terminal device 21a is merely stored in the storage unit 260c, but is not being executed.

As explained above, the protection and control terminal devices 21a to 21c in the embodiment hold, in a dispersed manner, the applications which realize the functions of the adjacent protection and control terminal devices 21a to 21c in addition to the applications which realizes their own functions.

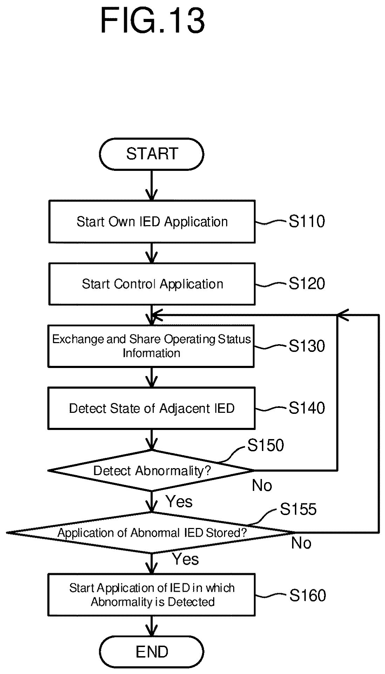

Next, the operations of the protection and control terminal devices 21a to 21c in the embodiment will be explained in detail with reference to Fig. 13 to Fig. 16.

The arithmetic unit 230a of the protection and control terminal device 21a reads the IED 21a application 262a stored in the storage unit 260a and executes it on the memory 240a. Similarly, the arithmetic unit 230b of the protection and control terminal device 21b reads the IED 21b application 262b stored in the storage unit 260b and executes it on the memory 240b. Further, the arithmetic unit 230c of the protection and control terminal device 21c reads the IED 21c application 262c stored in the storage unit 260c and executes it on the memory 240c. Thus, the protection and control terminal devices 21a to 21c fulfill their respective functions (Step S110).

Next, the arithmetic unit 230a of the protection and control terminal device 21a reads the control application 261a stored in the storage unit 260a and executes it on the memory 240a. Similarly, the arithmetic unit 230b of the protection and control terminal device 21b executes the control application 261b stored in the storage unit 260b, on the memory 240b. Further, the arithmetic unit 230c of the protection and control terminal device 21c executes the control application 261c stored in the storage unit 260c, on the memory 240c (Step S120).

The IED state detection unit 232a in the arithmetic unit 230a of the protection and control terminal device 21a inquires of the adjacent protection and control terminal devices 21b and 21c about the operating statuses via the information transmission/reception unit 231a. In addition, the IED state detection unit 232a of the arithmetic unit 230a notifies the protection and control terminal devices 21b and 21c of the operating status of the protection and control terminal device 21a.

The IED state detection units 232b and 232c of the protection and control terminal devices 21b and 21c which have received the inquiry notify of the respective operating statuses of the protection and control terminal devices 21b and 21c and store the received operating status of the protection and control terminal device 21a in the storage units 260b and 260c. By the above operations, the protection and control terminal devices 21a to 21c come into a state of sharing each other's operating statuses. The exchange of the operating statuses is executed at a predetermined time interval (Step S130).

Here, if an abnormality occurs in the functions of the protection and control terminal device 21a, the abnormality determination units 233b and 233c of the protection and control terminal devices 21b and 21c detect the abnormality of the adjacent protection and control terminal device 21a at the timing of exchange of the operating statuses. The detection of the abnormality of the adjacent protection and control terminal device is not limited to the time of exchange of the operating statuses. For example, when the protection and control terminal device itself detects its own abnormality, the protection and control terminal device may notify each of the adjacent protection and control terminal devices of its own abnormality (Step S140).

If the abnormality determination unit 233b of the protection and control terminal device 21b and the abnormality determination unit 233c of the protection and control terminal device 21c detect an abnormality of the adjacent protection and control terminal device 21a (Yes at Step S150), the application control units 234b and 234c determine whether the application of the protection and control terminal device 21a is stored in their respective storage units 260b and 260c (Step S155). In the example illustrated in FIG. 11 and FIG. 12, the storage units 260b and 260c store the IED 21a application A and the IED 21a application B, respectively.

If the storage units 260b and 260c store the application of the protection and control terminal device 20a as a result of the determination (Yes at S155), the application control units 234b and 234c start the IED 21a application A 263b and the IED 21a application B 263c which are stored in the storage units 260b and 260c, respectively. Thus, the protection and control terminal device 21b fulfills part of the functions as the protection and control terminal device 21a in addition to the functions as the protection and control terminal device 21b, and the protection and control terminal device 21c fulfills part of the functions as the protection and control terminal device 21a in addition to the functions as the protection and control terminal device 21c (Step S160).

If the storage units 260b and 260c do not store the application of the protection and control terminal device 21a as a result of the determination (No at S155), the IED state detection units 232a to 232c continue the exchange and sharing of the operating statuses with the adjacent protection and control terminal devices (S130).

If the abnormality determination unit 233b of the protection and control terminal device 21b does not detect an abnormality of the adjacent protection and control terminal device 21a (No at Step S150), the protection and control terminal device 21b continues the exchange and sharing of the operating statuses (Step S130).

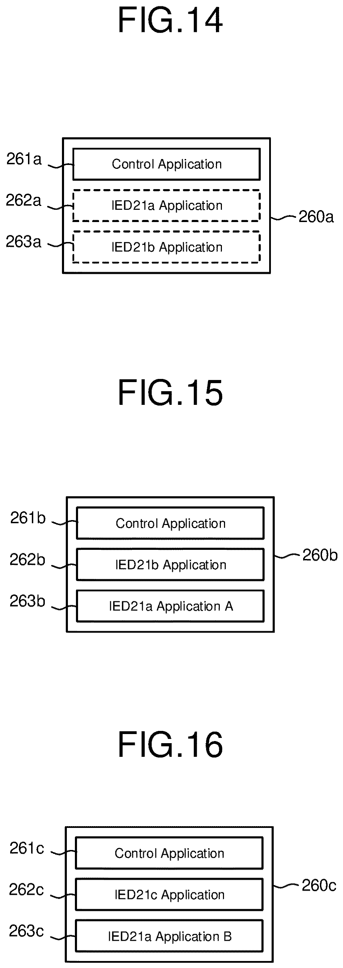

Fig. 14 illustrates the appearance of storage contents of the storage unit 260a of the protection and control terminal device 21a when the protection and control terminal devices 21b and 21c detect an abnormality of the protection and control terminal device 21a. Fig. 15 similarly illustrates the appearance of storage contents of the storage unit 260b of the protection and control terminal device 21b. Fig. 16 similarly illustrates the appearance of storage contents of the storage unit 260c of the protection and control terminal device 21c. As illustrated in Fig. 14, the IED 21a application 262a of the protection and control terminal device 21a has stopped its functions.

Further, as illustrated in Fig. 15, in the protection and control terminal device 21b, the IED 21a application A 263b is running in addition to the IED 21b application 262b. Further, as illustrated in Fig. 16, in the protection and control terminal device 21c, the IED 21a application B 263c is running in addition to the IED 21c application 262c. More specifically, the protection and control terminal devices 21b and 21c complement the functions of the protection and control terminal device 21a whose functions have stopped.

As explained above, the protection and control terminal device in this embodiment stores the application which fulfills the functions of the adjacent protection and control terminal device in a dispersed manner in advance, and if a failure occurs in the adjacent protection and control terminal device, the stored functions of the adjacent protection and control terminal device are operated. By this operation, it is possible to ensure the backup function of the protection and control terminal device without using a spare hardware resource. Further, the application is stored in a dispersed manner, and therefore even if there is a limit to the storage capacity in the storage unit, the plurality of protection and control terminal devices can complement the failed protection and control terminal device.

### (Third embodiment)

Next, a protection and control system in a third embodiment will be explained. The protection and control system in the third embodiment is made by changing the storage contents of the applications stored in the storage units of the protection and control terminal devices in the first embodiment and the second embodiment. In the following explanation, elements common to those in the first embodiment and the second embodiment are indicated by giving common signs and the duplicated explanation is omitted.

As illustrated in Fig. 1, a protection and control system 3 in this embodiment has a remote monitor and control device 10, protection and control terminal devices 22a to 22c, and information collection and control terminals 30a to 30c.

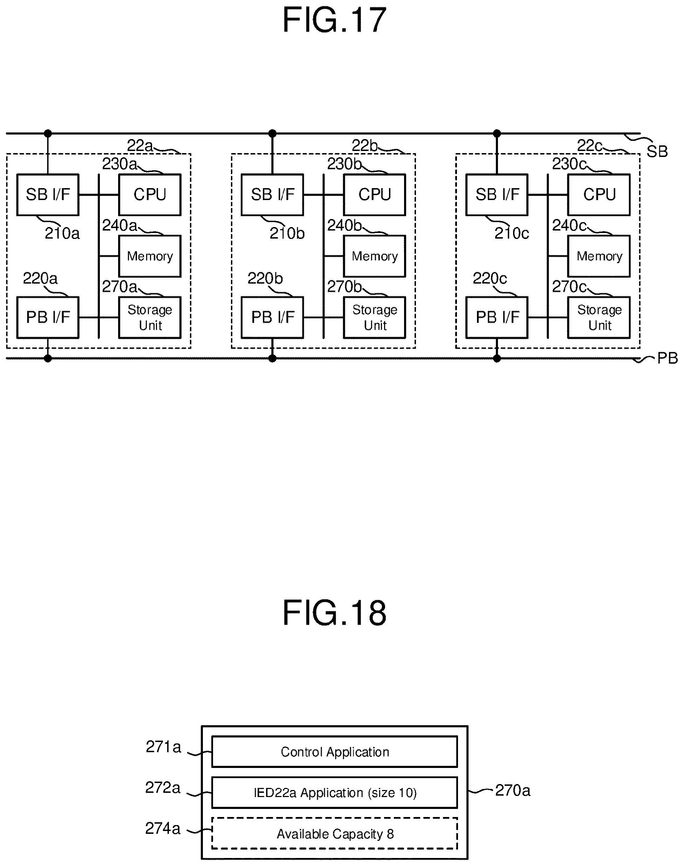

Fig. 17 is a block diagram illustrating a configuration example of the protection and control terminal devices 22a to 22c in the protection and control system 3 in this embodiment.

As illustrated in Fig. 17, the protection and control terminal device 22a is common in configuration with the protection and control terminal device 20a in the first embodiment except for a storage unit 270a. This also applies to the protection and control terminal devices 22b and 22c.

The storage unit 270a is a non-volatile storage medium for storing an application which realizes various functions of the protection and control terminal device 22a and a control application which controls execution of the application. The storage unit 270a stores in advance predetermined applications but may store an application downloaded via the station bus SB according to the instruction from the arithmetic unit 230a. Further, the storage unit 270a may store data to be used for application control. This also applies to a storage unit 270b and a storage unit 270c.

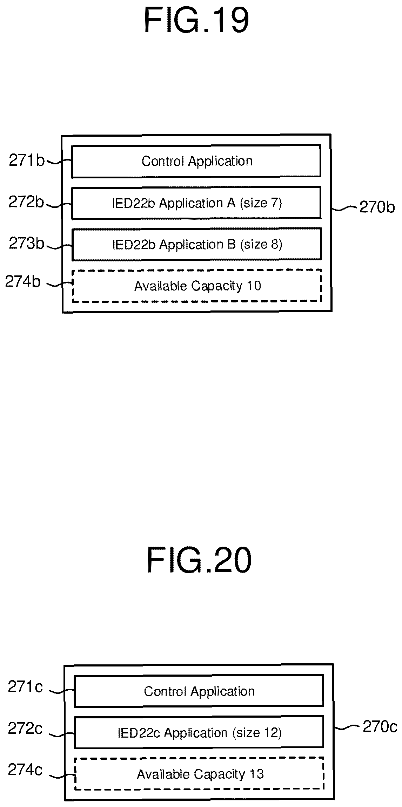

Here, the applications stored in the storage units 270a to 270c will be explained in detail with reference to Fig. 18 to Fig. 20. Fig. 18 is a conceptual diagram illustrating storage contents of the storage unit 270a of the protection and control terminal device 22a, Fig. 19 is a conceptual diagram illustrating storage contents of the storage unit 270b of the protection and control terminal device 22b, and Fig. 20 is a conceptual diagram illustrating storage contents of the storage unit 270c of the protection and control terminal device 22c.

As illustrated in Fig. 18, the storage unit 270a in the embodiment stores a control application 271a and an IED 22a application 272a (third application), and has an available space 274a. The control application 271a is an application which controls start and stop of an application. The IED 22a application 272a is an application which realizes the functions of the protection and control terminal device 22a. The available space 274a is a space capable of storing an application. Here, it is assumed that the size of the IED 22a application is 10 and the capacity of the available space 274a is 8.

More specifically, the storage unit 270a of the protection and control terminal device 22a has the available space capable of storing an application in addition to the application which realizes the functions of the protection and control terminal device 22a itself.

As illustrated in Fig. 19, the storage unit 270b in the embodiment stores a control application 271b, an IED 22b application A 272b, and an IED 22b application B 273b, and has an available capacity 274b. The control application 271b is an application which controls start and stop of an application. The IED 22b application A 272b is an application which realizes part of the functions of the protection and control terminal device 22b. The IED 22b application B 273b is an application which realizes part of the functions of the protection and control terminal device 22b. In this example, the protection and control terminal device 22b fulfills the functions by both the IED 22b application A 272b and the IED 22b application B 273b. The available space 274b is a space capable of storing an application. Here, it is assumed that the size of the IED 22b application A 272b is 7, the size of the IED 22b application B 273b is 8, and the capacity of the available space 274b is 10.

The IED 22b application A 272b stored in the storage unit 270b fulfills the functions of the protection and control terminal device 22b in conjunction with the IED 22b application B 273b. The storage unit 270b of the protection and control terminal device 20b has an available space capable of storing an application in addition to an application which realizes the functions of the protection and control terminal device 20b itself.

As illustrated in Fig. 20, the storage unit 270c in the embodiment stores a control application 271c and an IED 22c application 272c, and has an available capacity 274c. The control application 271c is an application which controls start and stop of an application. The IED 22c application 272c is an application which realizes the functions of the protection and control terminal device 22c. The available capacity 274c is a space capable of storing an application. Here, it is assumed that the size of the IED 22c application 272c is 12 and the capacity of the available capacity 274c is 13.

More specifically, the storage unit 270c of the protection and control terminal device 22c has an available space capable of storing an application in addition to the application which realizes the functions of the protection and control terminal device 22c itself.

As explained above, the protection and control terminal devices 22a to 22c in the embodiment have available spaces capable of storing applications in addition to the applications which realize their own functions.

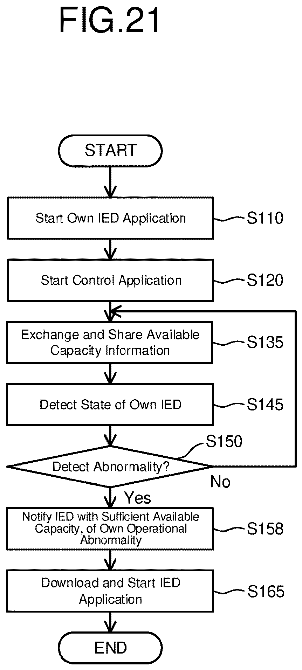

Next, the operations of the protection and control terminal devices 22a to 22c in the embodiment will be explained in detail with reference to Fig. 21 to Fig. 24.

The arithmetic unit 230a of the protection and control terminal device 22a reads the IED 22a application 272a stored in the storage unit 270a and executes it on the memory 240a. Similarly, the arithmetic unit 230b of the protection and control terminal device 22b reads the IED 22b application A 272b and the IED 22b application B 273b which are stored in the storage unit 270b, and executes them on the memory 240b. Further, the arithmetic unit 230c of the protection and control terminal device 22c reads the IED 22c application 272c stored in the storage unit 270c and executes it on the memory 240c. Thus, the protection and control terminal devices 22a to 22c fulfill their respective functions (Step S110).

Next, the arithmetic unit 230a of the protection and control terminal device 22a reads the control application 271a stored in the storage unit 270a and executes it on the memory 240a. Similarly, the arithmetic unit 230b of the protection and control terminal device 22b executes the control application 271b stored in the storage unit 270b, on the memory 240b. Further, the arithmetic unit 230c of the protection and control terminal device 22c executes the control application 271c stored in the storage unit 270c, on the memory 240c (Step S120).

The IED state detection unit 232a in the arithmetic unit 230a of the protection and control terminal device 22a inquires of the adjacent protection and control terminal devices 22b and 22c about the respective available capacities in the storage units 270b and 270c. In addition, the IED state detection unit 232a in the arithmetic unit 230a notifies the protection and control terminal devices 22b and 22c of the available capacity in the storage unit 270a of the protection and control terminal device 22a.

The IED state detection units 232b and 232c of the arithmetic units 230b and 230c of the protection and control terminal devices 22b and 22c which have received the inquiry, each notify of the respective available capacities in the storage units 270b and 270c of the protection and control terminal devices 22b and 22c, and store the received available capacity in the storage unit 270a of the protection and control terminal device 22a into each of the storage units 270b and 270c. By the above operations, the protection and control terminal devices 22a to 22c come into a state of sharing each other's available capacities in the storage units. The exchange of the available capacity information is executed at a predetermined time interval (Step S135).

The protection and control terminal devices 22a to 22c always check the normality of their own functions. More specifically, the abnormality determination units 233a to 233c of the arithmetic units 230a to 230c of the protection and control terminal devices 22a to 22c always monitor the operations of the IED 22a application to the IED 22c application (Step S145).

For example, if the IED state detection unit 232a in the arithmetic unit 230a of the protection and control terminal device 22a detects an abnormality in the operation of its own IED 22a application 272a (Yes at Step S150), the application control unit 234a of the arithmetic unit 230a refers to the sharing available capacity information on the respective storage units 270b and 270c of the adjacent protection and control terminal devices 22b and 22c, and compares them with the size of the IED 22a application 272a which fulfills its own functions. More specifically, the application control unit 234a selects the protection and control terminal device capable of storing and executing the IED 22a application 272a which fulfills its own functions. The application control unit 234a notifies the protection and control terminal device capable of storage and execution, of its own operational abnormality (Step S158).

In the example illustrated in Fig. 18 to Fig. 20, the size of the IED 22a application 272a is 10, the size of the available capacity 274b of the protection and control terminal device 22b is 10, and the size of the available capacity 274c of the protection and control terminal device 22c is 13. Therefore, the protection and control terminal device 22b and the protection and control terminal device 22c can store and execute the IED 22a application 272a. In this case, it is preferable to select the protection and control terminal device 22b having an available capacity equal to the size of the IED 22a application 272a in order to efficiently use the available capacity in the storage unit.

Hence, the application control unit 234a of the protection and control terminal device 22a notifies the protection and control terminal device 22b that its own operation is abnormal. The application control unit 234b of the protection and control terminal device 22b which has received the notification downloads the IED 22a application 272a stored in the storage unit 270a of the protection and control terminal device 22a via the station bus SB, and stores it in the available capacity 274b in the storage unit 270b. The application control unit 234b of the protection and control terminal device 22b starts the IED 22a application stored in the available capacity 274b in the storage unit 270b (Step S165).

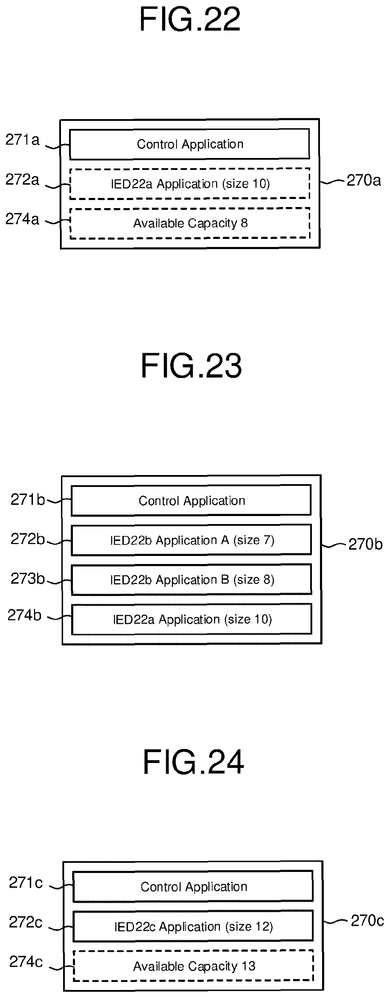

Fig. 22 illustrates the appearance of storage contents of the storage unit 270a of the protection and control terminal device 22a when the protection and control terminal device 22a notifies the protection and control terminal device 22b of its own abnormality and the protection and control terminal device 22b downloads the IED 22a application 272a from the protection and control terminal device 22a. Fig. 23 similarly illustrates the appearance of storage contents of the storage unit 270b of the protection and control terminal device 22b. Fig. 24 similarly illustrates the appearance of storage contents of the storage unit 270c of the protection and control terminal device 22c. As illustrated in Fig. 22, the IED 22a application 272a of the protection and control terminal device 22a has stopped its functions.

Further, as illustrated in Fig. 23, in the protection and control terminal device 22b, the downloaded IED 22a application is stored in the available space 274b and is running in addition to the IED 22b application A 272b and the IED 22b application B 273b. Further, as illustrated in Fig. 24, in the protection and control terminal device 22c, the IED 22c application 272c is running. More specifically, the protection and control terminal device 22b complements the functions of the protection and control terminal device 22a whose functions have stopped.

As explained above, the protection and control terminal device in this embodiment shares the available capacity in the adjacent protection and control terminal device in advance, and if an abnormality occurs in its own application, the protection and control terminal device notifies the adjacent protection and control terminal device capable of storing and executing its own application of its own abnormality. Then, the protection and control terminal device which has received the notification downloads the application from the protection and control terminal device which has issued the notification, starts it, and complements the protection and control terminal device in which the abnormality has occurred. By this operation, it is possible to ensure the backup function of the protection and control terminal device without using a spare hardware resource.

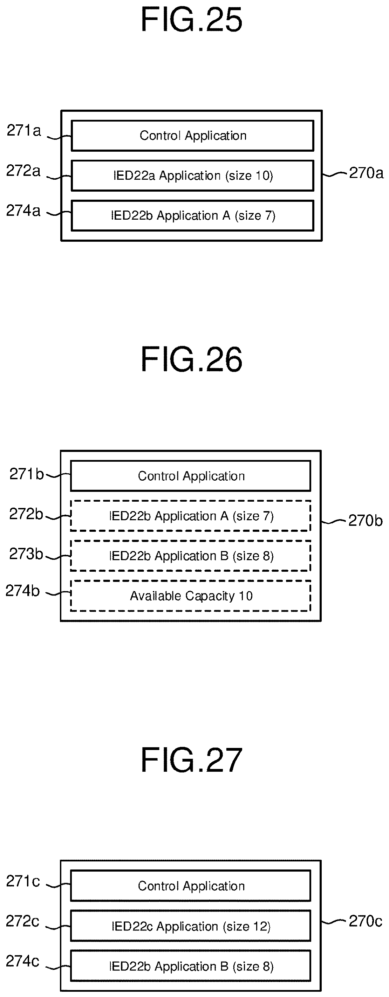

Here, another operation example of the third embodiment will be explained with reference to Fig. 25 to Fig. 27. The operation example illustrated in Fig. 25 to Fig. 27 is an example of ensuring the backup function of the protection and control terminal device in which the abnormality has occurred, by a plurality of protection and control terminal devices.

The protection and control terminal device in the above-explained embodiment complements the functions of the protection and control terminal device in which the abnormality has occurred, without preparing any spare hardware resource. For example, if abnormalities occur in the functions of the IED 22b application A 272b and the IED 22b application B 273b of the protection and control terminal device 22b illustrated in Fig. 19, the adjacent protection and control terminal device needs to store and execute these two applications.

At Step S158 in Fig. 21, for example, the application control unit 234b, when selecting the protection and control terminal device capable of storing and executing the IED 22b application A 272b and the IED 22b application B 273b which fulfill its own functions, preferably selects, as its candidate, the adjacent protection and control terminal devices in descending order from the one having the largest available capacity. This is because if one protection and control terminal device can store and execute two applications, the number of the protection and control terminal devices which execute the backup function can be minimized.

On the other hand, in the example illustrated in Fig. 18 to Fig. 21, if an abnormality occurs in the protection and control terminal device 22b, the total value of the respective sizes of the IED 22b application A 272b and the IED 22b application B 273b is 15 (= 7 + 8), so that the protection and control terminal device 22a or the protection and control terminal device 22c cannot store them by the available capacity (8 or 12 each) alone.

Hence, in the operation example illustrated in Fig. 25 to Fig. 27, the IED 22b application A 272b and the IED 22b application B 273b are stored and executed in a dispersed manner in a plurality of different protection and control terminal devices. More specifically, the application control unit 234b selects the protection and control terminal devices 22a and 22c as the complementing protection and control terminal devices, and notifies each of them of its own operational abnormality. The protection and control terminal devices 22a and 22c which have received the notification download and start the IED 22b application A 272b and the IED 22b application B 273b respectively from the protection and control terminal device 22b.

Fig. 25 illustrates the appearance of storage contents of the storage unit 270a of the protection and control terminal device 22a when the abnormality determination unit 234b of the protection and control terminal device 22b detects its own abnormality and notifies each of the protection and control terminal devices 22a and 22c of its own operational abnormality, and the protection and control terminal devices 22a and 22c download the IED 22b application A 272b and the IED 22b application B 273b from the protection and control terminal device 22b. Fig. 26 similarly illustrates the appearance of storage contents of the storage unit 270b of the protection and control terminal device 22b. Fig. 27 similarly illustrates the appearance of storage contents of the storage unit 270c of the protection and control terminal device 22c. As illustrated in Fig. 26, the IED 22b application A 272b and the IED 22b application B 273b of the protection and control terminal device 22b have stopped their functions.

As illustrated in Fig. 25, in the protection and control terminal device 22a, the downloaded IED 22b application A is stored in the available space 274a and is running in addition to the IED 22a application 272a. Further, as illustrated in Fig. 27, in the protection and control terminal device 22c, the downloaded IED 22b application B is stored in the available space 274c and is running in addition to the IED 22c application 272c. More specifically, the protection and control terminal devices 22a and 22c complement the functions of the protection and control terminal device 22a whose functions have stopped.

As explained above, according to the third embodiment, the protection and control terminal device which complements the protection and control terminal device in which an abnormality has occurred is decided based on the available capacity, so that it is possible to relatively flexibly complement it. Note that the application is downloaded from the protection and control terminal device whose functions have stopped in the above embodiment, but the present invention is not limited to this. The application may be downloaded from the remote monitor and control device which has stored the application in advance, via the station bus SB.

### (Fourth embodiment)

Next, a protection and control system in a fourth embodiment will be explained. The protection and control system in the fourth embodiment is made by changing the storage contents of the applications stored in the storage units of the protection and control terminal devices in the first to third embodiments. In the following explanation, elements common to those in the first to third embodiments are indicated by giving common signs and the duplicated explanation is omitted.

As illustrated in Fig. 1, a protection and control system 4 in this embodiment has a remote monitor and control device 10, protection and control terminal devices 23a to 23c, and information collection and control terminals 30a to 30c.

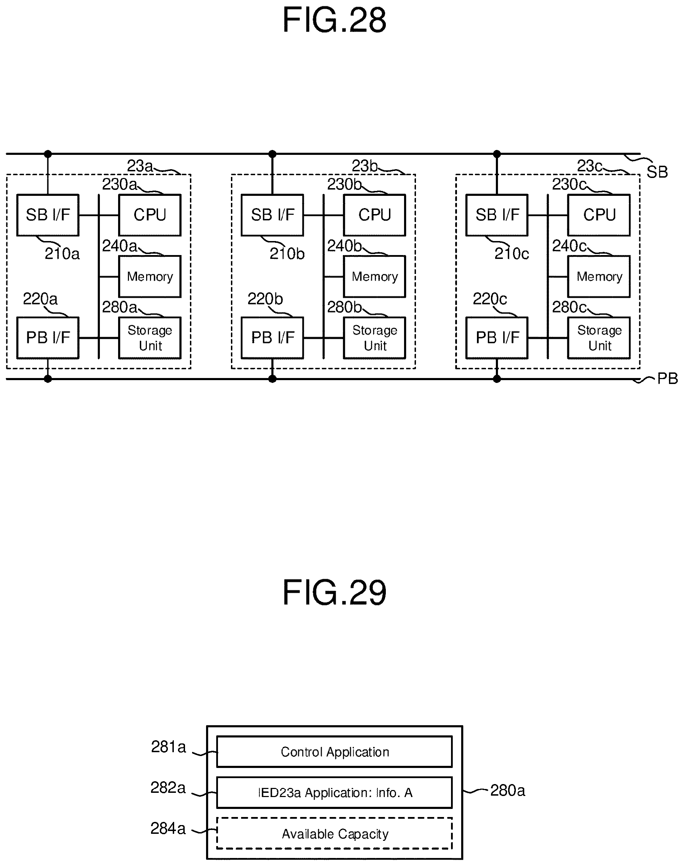

Fig. 28 is a block diagram illustrating a configuration example of the protection and control terminal devices 23a to 23c in the protection and control system 4 in this embodiment.

As illustrated in Fig. 28, the protection and control terminal device 23a is common in configuration with the protection and control terminal device 20a in the first embodiment except for a storage unit 280a. This also applies to the protection and control terminal devices 23b and 23c.

The storage unit 280a is a non-volatile storage medium for storing an application which realizes various functions of the protection and control terminal device 23a and a control application which controls execution of the application. The storage unit 280a stores in advance predetermined applications but may store an application downloaded via the station bus SB according to the instruction from the arithmetic unit 230a. Further, the storage unit 280a may store data, equipment information, and so on to be used for application control. This also applies to a storage unit 280b and a storage unit 280c.

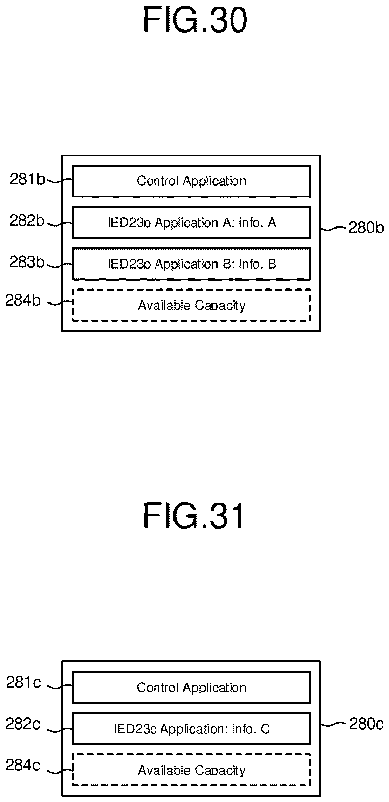

Here, the applications stored in the storage units 280a to 280c will be explained in detail with reference to Fig. 29 to Fig. 31. Fig. 29 is a conceptual diagram illustrating storage contents of the storage unit 280a of the protection and control terminal device 23a, Fig. 30 is a conceptual diagram illustrating storage contents of the storage unit 280b of the protection and control terminal device 23b, and Fig. 31 is a conceptual diagram illustrating storage contents of the storage unit 280c of the protection and control terminal device 23c.

As illustrated in Fig. 29, the storage unit 280a in the embodiment stores a control application 281a and an IED 23a application 282a, and has an available space 284a. The control application 281a is an application which controls start and stop of an application. The IED 23a application 282a is an application which realizes the functions of the protection and control terminal device 23a. The available space 284a is a space capable of storing an application. Here, it is assumed that the storage unit 280a stores, for example, equipment information A received from the information collection and control terminals 30a to 30c via the process bus PB by the functions of the IED 23a application 282a. Here, the equipment information is data and information indicating a status of equipment which are collected by the information collection and control terminal, and the like.

More specifically, the storage unit 280a of the protection and control terminal device 23a has an available space capable of storing an application in addition to the application which realizes the functions of the protection and control terminal device 23a itself. Further, the storage unit 280a stores the equipment information A received from the information collection and control terminal.

As illustrated in Fig. 30, the storage unit 280b in the embodiment stores a control application 281b, an IED 23b application A 282b, and an IED 23b application B 283b, and has an available capacity 284b. The control application 281b is an application which controls start and stop of an application. The IED 23b application A 282b is an application which realizes part of the functions of the protection and control terminal device 23b. The IED 23b application B 283b is an application which realizes part of the functions of the protection and control terminal device 23b. In this example, the protection and control terminal device 23b fulfills the functions by both the IED 23b application A 282b and the IED 23b application B 283b. The available space 284b is a space capable of storing an application. Here, the storage unit 280b stores equipment information A and equipment information B received from the information collection and control terminals 30a to 30c via the process bus PB by the functions of the IED 23b application A 282b and the IED 23b application B 283b.

The IED 23b application A stored in the storage unit 280b fulfills the functions of the whole protection and control terminal device 23b in conjunction with the IED 23b application B. The storage unit 280b of the protection and control terminal device 23b has an available space capable of storing an application in addition to the application which realizes the functions of the protection and control terminal device 23b itself. Further, the storage unit 280b stores the equipment information A and B received from the information collection and control terminals.

As illustrated in Fig. 31, the storage unit 280c in the embodiment stores a control application 281c and an IED 23c application 282c, and has an available capacity 284c. The control application 281c is an application which controls start and stop of an application. The IED 23c application 282c is an application which realizes the functions of the protection and control terminal device 23c. The available capacity 284c is a space capable of storing an application. Here, the storage unit 280c stores equipment information C received from the information collection and control terminals 30a to 30c via the process bus PB by the IED 23c application.

More specifically, the storage unit 280c of the protection and control terminal device 23c has an available space capable of storing an application in addition to the application which realizes the functions of the protection and control terminal device 23c itself. Further, the storage unit 280c stores the equipment information C received from the information collection and control terminal.

As explained above, the protection and control terminal devices 23a to 23c in the embodiment have available spaces capable of storing applications in addition to the applications which realize their own functions. Further, the storage units 280a to 280c of the protection and control terminal devices 23a to 23c store equipment information received from the information collection and control terminals 30a to 30c via the process bus PB. The equipment information may be analog information, digital information, or the ones in other forms.

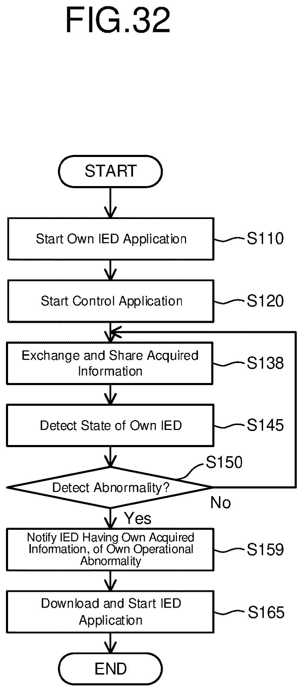

Next, the operations of the protection and control terminal device 23a to the protection and control terminal device 23c in the embodiment will be explained in detail with reference to Fig. 32 to Fig. 35.

The arithmetic unit 230a of the protection and control terminal device 23a reads the IED 23a application 282a stored in the storage unit 280a and executes it on the memory 240a. Similarly, the arithmetic unit 230b of the protection and control terminal device 23b reads the IED 23b application A 282b and the IED 23b application B 283b stored in the storage unit 280b and executes them on the memory 240b. Further, the arithmetic unit 230b of the protection and control terminal device 23c reads the IED 23c application 282c stored in the storage unit 280c and executes it on the memory 240c. Thus, the protection and control terminal devices 23a to 23c fulfill their respective functions (Step S110).

Next, the arithmetic unit 230a of the protection and control terminal device 23a reads the control application 281a stored in the storage unit 280a and executes it on the memory 240a. Similarly, the arithmetic unit 230b of the protection and control terminal device 23b executes the control application 281b stored in the storage unit 280b, on the memory 240b. Further, the arithmetic unit 230c of the protection and control terminal device 23c executes the control application 281c stored in the storage unit 280c, on the memory 240c (Step S120).

The information transmission/reception unit 231a in the arithmetic unit 230a of the protection and control terminal device 23a inquires of the adjacent protection and control terminal devices 23b and 23c about the types of the equipment information respectively stored in the storage units 280b and 280c. In addition, the information transmission/reception unit 231a notifies the protection and control terminal devices 23b and 23c of the type of the equipment information stored in the storage unit 280a of the protection and control terminal device 23a. For example, in the example illustrated in Fig. 28, the storage unit 280a stores the equipment information A, and therefore the information transmission/reception unit 231a transmits the information A as the type of the equipment information stored in itself to the protection and control terminal devices 23b and 23c.

The information transmission/reception units 231b and 231c in the respective arithmetic units 230b and 230c of the protection and control terminal devices 23b and 23c which have received the inquiry notify of the types of the equipment information stored in the respective storage units 280b and 280c of the protection and control terminal devices 23b and 23c, and store the received type of the equipment information stored in the storage unit 280a of the protection and control terminal device 23a into the respective storage units 280b and 280c. For example, in the example illustrated in Fig. 30 and Fig. 31, the storage unit 280b stores the equipment information A and B, and the storage unit 280c stores the equipment information C. Hence, the information transmission/reception units 231b and 231c notify the protection and control terminal device 23a of the information A and B and the information C respectively as the types of the equipment information stored in themselves.

By the above operation, the protection and control terminal devices 23a to 23c come into a state of sharing the types of the equipment information stored in each other's storage units. The exchange of the equipment information is executed at a predetermined time interval (Step S138).

The protection and control terminal devices 23a to 23c always check the normality of their own functions. More specifically, the arithmetic units 230a to 230c of the protection and control terminal devices 23a to 23c always monitor the operations of the IED 23a application to the IED 23c application (Step S145).

For example, if the abnormality determination unit 233a in the arithmetic unit 230a of the protection and control terminal device 23a detects an abnormality in the operation of its own IED 23a application 282a (Yes at Step S150), the application control unit 234a of the arithmetic unit 230a refers to the types of the equipment information stored in the respective storage units 280b and 280c of the sharing adjacent protection and control terminal devices 23b and 23c, and selects the protection and control terminal device having the equipment information of the same type as that of the equipment information stored in its own storage unit 280a. The application control unit 234a in the arithmetic unit 230a notifies the selected protection and control terminal device of its own operational abnormality (Step S159).

In the example illustrated in Fig. 29 to Fig. 31, the protection and control terminal device 23a stores the equipment information A, the protection and control terminal device 23b stores the equipment information A and B, and the protection and control terminal device 23c stores the equipment information C. Hence, the application control unit 234a notifies the protection and control terminal device 23b storing the equipment information A of the same type as that of its own equipment information, of its own operational abnormality.

The application control unit 234a of the protection and control terminal device 23a transmits the notification of the operational abnormality to the protection and control terminal device 23b via the station bus SB and the process bus PB. The application control unit 234b of the protection and control terminal device 23b which has received the notification of the operational abnormality downloads the IED 23a application 282a stored in the storage unit 280a of the protection and control terminal device 23a, and stores it in the available capacity 284b in the storage unit 280b. The application control unit 234b of the protection and control terminal device 23b starts the IED 23a application stored in the available capacity 284b in the storage unit 280b (Step S165).

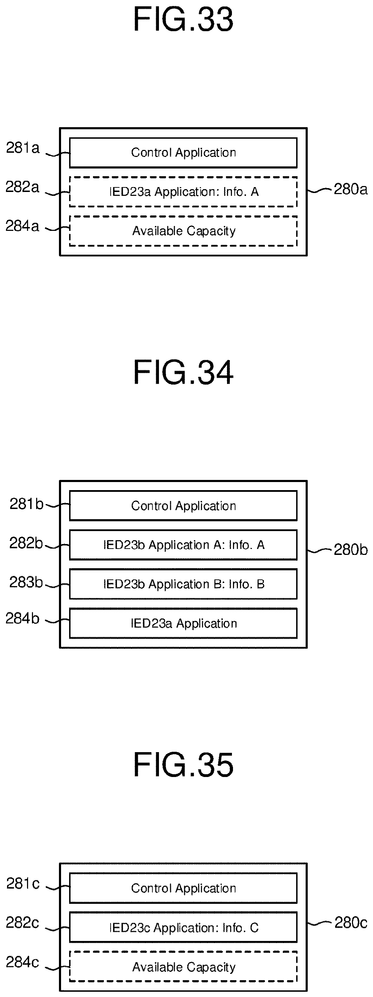

Fig. 33 illustrates the appearance of storage contents of the storage unit 280a of the protection and control terminal device 23a when the protection and control terminal device 23a detects its own abnormality and notifies the protection and control terminal device 23b of its own operational abnormality, and then the protection and control terminal device 23b downloads the IED 23a application. Fig. 34 similarly illustrates the appearance of storage contents of the storage unit 280b of the protection and control terminal device 23b. Fig. 35 similarly illustrates the appearance of storage contents of the storage unit 280c of the protection and control terminal device 23c. As illustrated in Fig. 33, the IED 23a application 282a of the protection and control terminal device 23a has stopped its functions.

Further, as illustrated in Fig. 34, in the protection and control terminal device 23b, the downloaded IED 23a application is stored in the available space 284b and is running in addition to the IED 23b application A 282b and the IED 23b application B 283b. Further, as illustrated in Fig. 35, in the protection and control terminal device 23c, the IED 23c application 282c is running. More specifically, the protection and control terminal device 23b complements the functions of the protection and control terminal device 23a whose functions have stopped.

As explained above, for the protection and control terminal device in this embodiment, the adjacent protection and control terminal devices share the types of the equipment information respectively received from the information collection and control terminals 30a to 30c in advance, and the protection and control terminal device notifies, if an abnormality occurs in its own applications, the adjacent protection and control terminal device storing the equipment information of the same type as that of the equipment information stored in itself, of its own abnormality. Then, the protection and control terminal device which has received the notification downloads the application from the protection and control terminal device which has issued the notification and starts it to complement the protection and control terminal device in which the abnormality has occurred. By this operation, it is possible to ensure the backup function of the protection and control terminal device without using a spare hardware resource.

In the protection and control terminal device in this embodiment, the protection and control terminal device having the equipment information acquired from the information collection and control terminal performs the complement, so that a smoother backup function can be realized. Note that in the above embodiment, the application is downloaded from the protection and control terminal device which has notified of its own abnormality, but the present invention is not limited to this. The application may be downloaded from the remote monitor and control device which has stored the application in advance, via the station bus SB.

In the protection and control system in the embodiment explained above, in response to the occurrence of the abnormality in the protection and control terminal device, the other protection and control terminal device automatically fulfills the complementary function, but the present invention is not limited to this. Before the other protection and control terminal device fulfills the complementary function, a test of transmitting test data from a test device connected to the station bus SB or the process bus PB may be performed. In this case, it is possible to more surely complement the protection and control terminal device in which an abnormality has occurred. In this event, the test device may be connected to the protection and control terminal device via an external network different from the station bus SB or the process bus PB.

Further, in the case of performing the test by the test device before fulfilling the complementary function, the information collection and control terminal may have the function of the test device. This can surely realize the complementary function without requiring any special hardware resources.

Further, in the protection and control system in the embodiment, when, in response to the occurrence of the abnormality in the protection and control terminal device, the other protection and control terminal device fulfills the complementary function, the protection and control terminal device may shut down autonomously or by remote control. This can eliminate the influence on the operation of the other protection and control terminal device which fulfills the complementary function.

Further, in the protection and control system in the embodiment, in the case where in response to the occurrence of the abnormality of the protection and control terminal device, the other protection and control terminal device has fulfilled the complementary function and when the functions of the protection and control terminal device in which the abnormality has occurred are restored, the complementary operation of the other protection and control terminal device which is complementing the functions may stop autonomously or by remote control. This can suppress an arithmetic processing load of the protection and control terminal device which fulfills the complementary function.

Further, in the protection and control system in the embodiment, in the case where in response to the occurrence of the abnormality of the protection and control terminal device, the other protection and control terminal device fails to start the complementary function, a start process of the complementary function may stop autonomously or by remote control. Similarly, the start process of the complementary function may restart autonomously or by remote control.

Further, in the protection and control system in the embodiment, a function to be complemented is executed at all times, and the complementary function may be instantaneously started when the abnormality of the protection and control terminal device is detected.

While certain embodiments of the present invention have been described herein, these embodiments have been presented by way of example only, and are not intended to limit the scope of the inventions. Indeed, the novel embodiments described herein may be embodied in a variety of other forms; furthermore, various omissions, substitutions and changes may be made without departing from the spirit of the inventions. The accompanying claims and their equivalents are intended to cover such forms or modifications as would fall within the scope and spirit of the inventions.

### EXPLANATION OF REFERENCE SIGNS

1,2,3,4...protection and control system,
10...remote monitor and control device as Tele-Control equipment (TC),
20a, 21a, 22a, 23a, 20b, 21b, 22b, 23b, 20c, 21c, 22c, 23c...protection and control terminal device as Intelligent Electronic Device (IED),
30a, 30b, 30c...information collection and control terminal as Process Interface Unit,
210a, 210b, 210c...station bus interface,
220a, 220b, 220c...process bus interface,
230a, 230b, 230c...arithmetic unit (CPU),
231a, 231b 231c...information transmission/reception unit,
232a, 232b, 232c...IED state detection unit,
233a, 233b, 233c...abnormality determination unit,
234a, 234b, 234c...application control unit,
240a, 240b, 240c...memory,
250a, 250b, 250c, 260a, 260b, 260c, 270a, 270b, 270c, 280a, 280b, 280c...storage unit,
251a, 261a, 271a, 281a...control application,
252a...IED 20a application, 253a...IED 20b application,
252b...IED 20b application, 253b...IED 20a application,
262a...IED 21a application, 263a...IED 21b application,
262b...IED 21b application, 263b...IED 21a application A,
262c...IED 21c application, 263c...IED 21a application B,
272a...IED 22a application, 274a...available capacity,
272b...IED 22b application A, 273b...IED 22b application B, 274b...available capacity,
272c...IED 22c application, 274c...available capacity,
282a...IED 23a application, 284a...available capacity,
282b...IED 23b application A, 283b...IED 23b application B, 284b...available capacity,
282c...IED 23c application, 284c...available capacity,
SB...station bus, PB...process bus.

## Claims

1. A protection and control terminal device constituting a protection and control system for protecting and controlling equipment constituting an electric power system, comprising:
a storage unit configured to store a first application for executing a function of the protection and control terminal device, and a second application for executing a function of another protection and control terminal device constituting the protection and control system and different from the protection and control terminal device;
a first arithmetic unit configured to execute the first application; and
a second arithmetic unit configured to execute the second application when an abnormality occurs in the another protection and control terminal device different from the protection and control terminal device.

2. The protection and control terminal device according to claim 1, further comprising
a state detection unit configured to receive an operating status of the another protection and control terminal device different from the protection and control terminal device, wherein
the second arithmetic unit executes the second application based on the received operating status.

3. The protection and control terminal device according to claim 1, wherein:
the second application is included in the another protection and control terminal device different from the protection and control terminal device in a dispersed manner; and
the second arithmetic unit executes part of the second application.

4. The protection and control terminal device according to claim 1, further comprising
a transmission/reception unit configured to receive the second application from the another protection and control terminal device different from the protection and control terminal device and store the second application in the storage unit, wherein
the second arithmetic unit executes the second application stored in the storage unit by the transmission/reception unit.

5. A protection and control terminal device constituting a protection and control system for protecting and controlling equipment constituting an electric power system, comprising:
a storage unit configured to store a third application for executing a function of the protection and control terminal device;
a third arithmetic unit configured to execute the third application;
a state detection unit configured to monitor presence or absence of an abnormality in an operation of the third application executed by the third arithmetic unit; and
a transmission unit configured to transmit, when the state detection unit detects an abnormality in the operation of the third application, a notification of the abnormality in the operation to another protection and control terminal device different from the protection and control terminal device.

6. The protection and control terminal device according to claim 5, further comprising
a reception unit configured to receive an available capacity capable of storing an application in the another protection and control terminal device different from the protection and control terminal device, wherein
the transmission unit transmits the notification of the abnormality in the operation to the another protection and control terminal device having a capacity capable of storing the third application different from the protection and control terminal device.

7. The protection and control terminal device according to claim 5, further comprising
a reception unit configured to receive presence or absence of information to be used by the third application in the another protection and control terminal device different from the protection and control terminal device, wherein
the transmission unit transmits a notification of the abnormality in the operation to the another protection and control terminal device having information held by the protection and control terminal device different from the protection and control terminal device.

8. The protection and control terminal device according to any one of claims 1 to 4, further comprising
an interface capable of connecting with a test terminal configured to test an operation of the protection and control terminal device over a network, wherein
the second arithmetic unit starts the second application after completion of the test by the test terminal.

9. The protection and control terminal device according to any one of claims 1 to 4, further comprising
a test arithmetic unit configured to test an operation of the protection and control terminal device, wherein
the second arithmetic unit starts the second application after completion of the test by the test arithmetic unit.

10. The protection and control terminal device according to any one of claims 5 to 7, further comprising
a power supply control unit configured to cut off a power supply after transmission of an application at occurrence of an abnormality and a capable of cutting off a power supply of the protection and control terminal device after the transmission unit transmits the abnormality in the operation.

11. The protection and control terminal device according to any one of claims 1 to 4, wherein
the second arithmetic unit stops the execution of the second application when the abnormality of the another protection and control terminal device different from the protection and control terminal device is resolved.

12. The protection and control terminal device according to any one of claims 1 to 4, wherein
the second arithmetic unit stops the operation when failing to start the second application.

13. The protection and control terminal device according to any one of claims 1 to 4, further comprising
an interface capable of connecting, when the second arithmetic unit fails to start the second application, with a restoration terminal capable of controlling the second arithmetic unit over a network, wherein
the second arithmetic unit is controlled by the restoration terminal.

14. A protection and control method by a protection and control terminal device constituting a protection and control system for protecting and controlling equipment constituting an electric power system, comprising:
storing a first application for executing a function of the protection and control terminal device, and a second application for executing a function of another protection and control terminal device constituting the protection and control system and different from the protection and control terminal device;
a first arithmetic unit executing the first application; and
a second arithmetic unit executing the second application when an abnormality occurs in the another protection and control terminal device different from the protection and control terminal device.

15. A protection and control method by a protection and control terminal device constituting a protection and control system for protecting and controlling equipment constituting an electric power system, comprising:
storing a third application for executing a function of the protection and control terminal device;
a third arithmetic unit executing the third application;
monitoring presence or absence of an abnormality in an operation of the third application executed by the third arithmetic unit; and
a transmission unit transmitting, when an abnormality in an operation of the third application is detected, a notification of the abnormality in the operation to another protection and control terminal device different from the protection and control terminal device.
